**Europäisches Patentamt**

**European Patent Office**

**Office européen des brevets**

(19)

(11) Veröffentlichungsnummer : **0 199 095**
**B1**

(12) # EUROPÄISCHE PATENTSCHRIFT

(45) Veröffentlichungstag der Patentschrift :
07.09.88

(51) Int. Cl.⁴ : **B 23 K 26/14**

(21) Anmeldenummer : 86103783.6

(22) Anmeldetag : 20.03.86

(54) **Laserschweissgerät.**

(30) Priorität : 16.04.85 DE 3513501

(43) Veröffentlichungstag der Anmeldung :
29.10.86 Patentblatt 86/44

(45) Bekanntmachung des Hinweises auf die Patenterteilung : 07.09.88 Patentblatt 88/36

(84) Benannte Vertragsstaaten :
BE DE FR GB IT SE

(56) Entgegenhaltungen :
US-A- 3 626 141
US-A- 4 431 899
JOURNAL OF APPLIED PHYSICS, Band 51, Nr. 11,
November 1980, Seiten 5954-5961, American Institute
of Physics, New York, US; K.C.A. CRANE et al.:
"Ablation of materials subjected to laser radiation
and high-speed gas flows"

(73) Patentinhaber : Rofin-Sinar Laser GmbH
Berzeliusstrasse 87
D-2000 Hamburg 74 (DE)

(72) Erfinder : Armier, karl-Heinz
Gropiusting 10
D-2000 Hamburg 60 (DE)
Erfinder : Ladiges, Bernd
Hobökenwiete 67
D-2000 Hamburg 56 (DE)
Erfinder : Scharfe, Wolf Dieter
Neuwerkstrasse 1c
D-2000 Wedel (DE)

(74) Vertreter : Glawe, Delfs, Moll & Partner Patentanwälte
Postfach 162 Liebherrstrasse 20
D-8000 München 26 (DE)

## Beschreibung

Die Erfindung bezieht sich auf ein Laserschweißgerät mit einer Düse zur Erzeugung eines quer verlaufenden Gasstroms zwischen der Optik und dem Strahlfokus zum Ablenken von in Richtung zur Optik bewegten Partikeln, bei dem der Düse gegenüber eine Aufnahmeöffnung einer Gasabzugsleitung angeordnet ist. Der Ausdruck « Laserschweißgerät » soll Geräte für ähnliche Anwendung, insbesondere zum Schweißen, einschließen.

Es läßt sich beim Schweißen mittels eines fokussierten Laserstrahls nicht verhindern, daß von der Schweißstelle Partikel weggeschleudert werden, die, wenn sie die Optik (Linse, Spiegel, Schutzscheibe) erreichen, diese verschmutzen und damit nicht nur die Leistung vermindern, sondern auch zu bleibenden Schäden an der Optik infolge örtlicher Überwärmung führen können. Diese Gefahr ist naturgemäß um so geringer, je weiter die Optik von dem Schweißfokus entfernt ist ; jedoch sind Optiken mit langer Brennweite häufig unerwünscht, weil sie einen größeren Brennfleckdurchmesser ergeben. Bekannt ist es auch, vor der Optik einen Schutzvorhang aus einem quergerichteten Gasstrahl zu bilden, der in Richtung zur Optik fliegende Partikel ablenken soll (US-PS 3 626 141, GB-OS 2 045 141). Abgesehen von ihrer lästig großen Lautstärke haben derartige Anordnungen den Nachteil, daß die von ihnen erzeugten Turbulenzen sich auch im Schweißbereich auswirken und dort zu Störungen, z. B. infolge einer Durchbrechung einer dort vorhandenen besonderen Schutzgasatmosphäre führen. Sie müssen daher in möglichst großer Entfernung vom Schweißfokus angeordnet werden, was zur Verwendung unerwünscht langbrennweitiger Objektive und zu einer Verminderung des Abstands zwischen dem Luftstrahlvorhang und der Optik führt. Diesen Abstand möchte man aber möglichst groß halten, weil die Wirksamkeit des Gasstrahlvorhangs um so größer ist, je größer sein Abstand von der Optik ist. Dies ist leicht verständlich, wenn man bedenkt, daß bei einem angenommenen Ablenkungswinkel, den eine zur Optik fliegende Partikel durch den Gasstrahlvorhang erleidet, die sich beim Erreichen der Optik durch die Partikel ergebende objektive seitliche Abweichung dem Abstand zwischen dem Gasstrahlvorhang und der Optik proportional ist.

Der Erfindung liegt daher die Aufgabe zugrunde, ein Laserschweißgerät der eingangs genannten Art zu schaffen, das die Geräuschentwicklung des Gasstroms verringert, seine schützende Wirkung verbessert und/oder eine ungünstige Beeinflussung des Schweißbereichs vermeidet, ohne zur Verwendung einer besonders langbrennweitigen Optik zu zwingen.

Die erfindungsgemäße Lösung besteht bei einem Laserschweißgerät der eingangs genannten Art darin, daß die Düse innerhalb eines Injektormantels vorgesehen ist wobei der Injektormantel und die Gasabzugsleitung einen im wesenltichen durchgehenden Strömungskanal bilden, der eine Queröffnung für den Laserstrahl aufweist.

Die den Gasstrom gegenüber der Düse aufnehmende Abzugsöffnung kann leicht so bemessen werden, daß sie unter Berücksichtigung der Strahlausbreitung den Strahl in seiner gesamten Querschnittsausdehnung einschließlich des ihn umgebenden Turbulenzbereichs aufnimmt. Schon diese Maßnahme bewirkt eine beträchtliche Reduzierung der Rückwirkungen auf den Schweißbereich. Diese Wirkung wird durch den die Düse umgebenden Injektormantel, der mit der Gasabzugsleitung einen durchgehenden Strömungskanal bildet, entscheidend gesteigert, weil der gesamte Strömungsvorgang sich in einem abgeschirmten Raum abspielt. Dies hat die Konsequenz, daß die den schützenden Gasstrom bildende und umgebende Anordnung wesentlich näher beim Schweißfokus angeordnet werden kann, als dies bei den vorbekannten Anordnungen der Fall war, so daß bei Verwendung gleicher Optiken eine größere Schutzentfernung zwischen dem Gasstrahlvorhang und der Optik eingeräumt werden kann. Dabei ist eine beträchtliche Senkung der Lautstärke zu verzeichnen, die darauf zurückgeht, daß der für die Schallentstehung verantwortliche Turbulenzbereich des Strahls umgeben wird von einem mehr oder weniger laminar strömenden, aus dem Injektormantel stammenden Strömungsmantel, der durch die Injektorwirkung der Anordnung in Bewegung gesetzt und mit dem Strahl durch die Gasabzugsleitung abgefördert wird.

Nach den bekannten Strömungsgesetzen wird im Strahlbereich ein Unterdruck erzeugt, der auch im Bereich der Queröffnung wirksam wird, die für den Durchtritt des Laserstrahls bestimmt ist. Dies kann insofern nachteilig sein, als dadurch Atmosphärenluft und Schutzgas aus der Umgebung des Schweißbereichs durch diese Queröffnung eingesogen wird. Zwar ist diese Beeinflussung des Schweißbereichs wesentlich schwächer als die bei den vorbekannten Anordnungen zu verzeichnende Turbulenzbeeinflussung. Jedoch ist es oftmals zweckmäßig, auch sie zu beseitigen. Dies kann dadurch geschehen, daß der Druck im Strömungskanal im Bereich dieser Queröffnung an den Atmosphärendruck angeglichen wird. Geeignete Mittel sind dem Strömungstechniker bekannt. Beispielsweise kann die Luft dem die Düse umgebenden Injektormantel mit einem gewissen Überdruck zugeführt werden, so daß der durch die Injektorwirkung des Düsenstrahls im Bereich der Queröffnung erzeugte Unterdruck gerade ausgeglichen wird. Ein einfacheres und deshalb in der Regel zu bevorzugendes Mittel besteht darin, daß die Strahlrichtung der Düse abweichend von der Richtung des Strömungskanals eine zu der Laserstrahlaustrittsöffnung gerichtete Komponente hat. Die dieser Richtungskomponente zugeordnete Staudruckkomponente des Düsenstrahls kann bei geeigneter Bemessung der Abweichung der Düsenrichtung von der Strömungskanalrichtung den sonst an der Laserstrahlaustrittöffnung auftretenden Druckunterschied ausgleichen.

Zweckmäßigerweise ist der Strömungskanal am objektseitigen Ende des den Laserstrahl führenden Objektivtubus angeordnet. Dies ist dank der Erfindung trotz der damit verbundenen großen Nähe zur Schweißstelle möglich und hat den Vorteil eines maximalen Abstands des Gasstrahlvorhangs von der Optik.

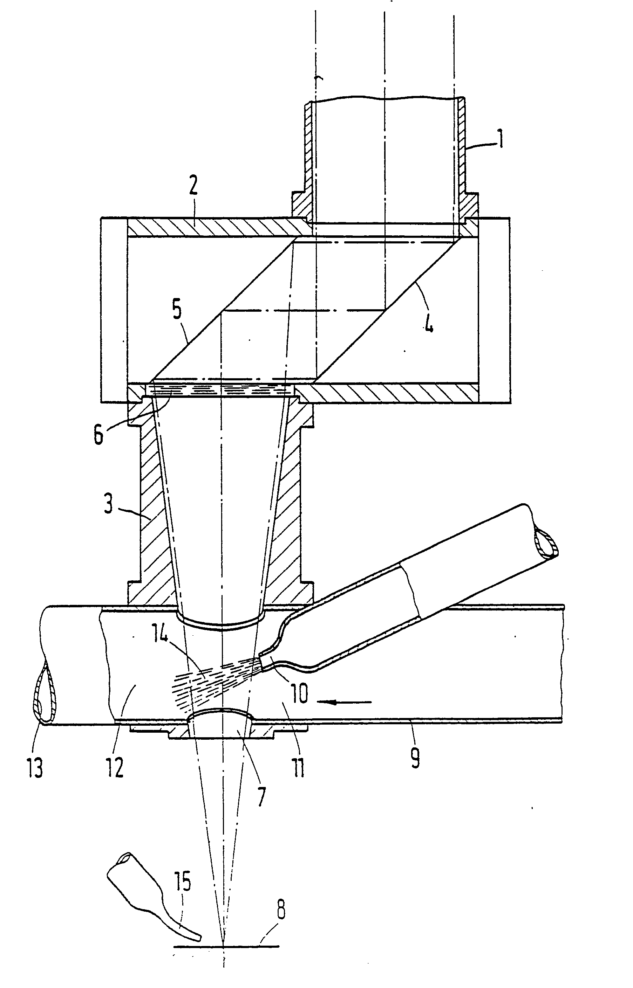

Die Erfindung wird im folgenden näher unter Bezugnahme auf die Zeichnung erläutert, die ein vorteilhaftes Ausführungsbeispiel in einem Längsschnitt veranschaulicht. Die Tubusse 1, 2 und 3 schließen einen Teil der Optik ein, insbesondere zwei Spiegel 4, 5 und eine Schutzscheibe 6. Der Tubus 3 bildet den Austrittskanal für den Laserstrahl, der sich bis zur Austrittsöffnung 7 hin verjüngt. Bei 8 Ist im Fokus ein Schweißwerkstück angedeutet.

Selbstverständlich kann das dargestellte Beispiel einer Optik auch anders gestaltet sein, beispielsweise ohne Spiegel und/oder ohne Schutzscheibe 6 mit Linsen.

Der Tubus 3 wird in möglichst großer Nähe zu seiner objektseitigen Austrittsöffnung 7 von einem Rohr 9 durchquert, dessen Achse mit derjenigen des Tubus in einer gemeinsamen Ebene liegt. Es bildet den Strömungskanal, in welchem erfindungsgemäß der Gasstrahlvorhang ausgebildet ist. Zu diesem Zweck ist in den rechten Teil des Rohrs 9 schräg von oben die Düse 10 eingeführt, die innerhalb des Rohrs 9 von einem Ringraum 11 umgeben wird, der zur Zuführung eines Mantelgasstroms dient. Auf der linken Seite bildet das Rohr 9 die Aufnahmeöffnung 12 und die Gasabzugsleitung 13 für den gestrichelt angedeuteten Düsenstrahl 14, dessen Breite man sich in Richtung quer zur Zeichenebene so groß vorzustellen hat, daß die gesamte in dem Rohr 9 für· den Durchtritt des Laserstrahls gebildete Queröffnung oberhalb der Austrittsöffnung 7 von ihm abgeschirmt wird. Partikel, die von der Schweißstelle 8 hochgeschleudert werden und die Optik gefährden, durchqueren den Strahlbereicht 14 und erhalten dabei einen so starken seitlichen Impuls, daß sie auf der beträchtlichen Distanz, die zwischen dem Strahl 14 und der Optik (Scheibe 6) liegt, hinreichend seitlich abgelenkt werden, um unschädlich zu werden.

Der durch Injektorwirkung vom Strahl 14 im Rohr 9 in Bewegung gesetzte Gasstrom ummantelt in wesentlich laminarer Strömung den Düsenstrahl 14 und dämpft daher dessen Geräuschentwicklung.

Außerdem trägt natürlich der auf die aufwärts fliegenden Partikel durch diesen mitgeschleppten Gasstrom ausgeübte Impuls zur Schutzwirkung bei.

Der durch die Injektorwirkung der Anordnung erzeugte Unterdruck wird im Bereich der Austrittsöffnung 7 dadurch kompensiert, daß der Strahl 14 eine zu der Austrittsöffnung 7 hin gerichtete Richtungskomponente (Winkelabweichung zwischen der Strahlmitte des Düsenstrahls und der Achse des Rohrs 9) aufweist. Die dieser Komponente zugeordnete Komponente des Staudrucks wirkt dem statischen Unterdruck entgegen. Der Zustrom von atmosphärischer Luft aus der Umgebung der Austrittsöffnung 7 und aus der Umgebung des Schweißbereichs wird dadurch gehemmt bzw. ausgeschlossen, wodurch auch eine Rückwirkung auf die die Schweißstelle umgebende Atmosphäre ausgeschlossen wird.

Diese Atmosphäre ist in der Regel ein Schutzgas, das beispielsweise durch die Schutzgasdüse 15 der Schweißstelle zugeführt wird.

Die Anordnung hat sich als sehr wirksam erwiesen, wozu — außer den bereits obengenannten Gründen — die Tatsache beiträgt, daß sich innerhalb des Injektormantels 9 hohe Gasgeschwindigkeiten bei verhältnismäßig kleinen Strahlquerschnitten verwirklichen lassen.

Die dem Rohr 9 und der Düse 10 zugeführte Luft kann gefiltert sein.

Bei einer praktischen Ausführung hat sich ein Winkel zwischen der Strahllängsrichtung und der Längsrichtung des Rohrs 9 zwischen 15° und 40°, zweckmäßigerweise bei etwa 30°, bewährt. Bei einem Gasdruck im Düsenrohr von 6 bar und einem statischen Druck in der Gasabzugsleitung von 0,6 bar ergab sich dabei ein Druckausgleich in der Laserstrahlaustrittsöffnung 7. Die Düse 10 war dabei als Flachdüse und zur Abdeckung des gesamten Laserstrahlaustrittsbereichs ausgebildet. Das geeignete Verhältnis zwischen der Größe des Düsenaustrittsquerschnitts und des Querschnitts der Aufnahmeöffnung ergab dabei in der Größenordnung von 1 : 10 aus der Bedingung, daß der aufgeweitete Düsenstrahl vollständig aufgenommen werden muß. Die Aufnahmeöffnung kann selbstverständlich auch größer ausgebildet sein, nämlich im Hinblick auf die Größe des die Düse umgebenden Injektormantels.

Es erwies sich mit einer solchen Anordnung als möglich, unter Verwendung einer Optik mit einer Brennweite von 125 mm und 20 mm Apertur sowie einem Abstand der Düse vom Fokus in der Größenordnung von 45 mm, die optik auch noch nach einer großen Anzahl von Schweißungen von Verschmutzung freizuhalten.

Bei alternativer Ausführungen ist es nicht erforderlich, daß der von dem Rohr 9 gebildete Injektormantel 11 mit der Aufnahmeöffnung 12 und der Gasabzugleitung 3 fluchtet, sofern nur eine kontinuierliche Strömungsführung unter Ummantelung des eigentlichen Abschirmstrahls 14 mit entsprechender Geräuschdämpfung erzielt wird. — Desgleichen kann der Druckausgleich im Bereich der Austrittsöffnung 7 auch durch andere Mittel als durch die Schrägstellung der Düse 10 erfolgen, beispielsweise durch Aufprägung eines entsprechenden Überdrucks im Injektormantel mittels eines geeigneten Gebläses oder durch einen Strömungswiderstand in der Gasabzugsleitung 13. — Wenn im Zusammenhang mit dem erläuterten Beispiel von einer Verschmutzung der Optik gesprochen wird, so ist damit das Fenster 6

5

gemeint, das bei anderen Ausführungen durch eine entsprechende Linse ersetzt sein kann, da die Erfindung den Schutz der empfindlicheren Spiegel und Linsen durch ein solches Fenster oftmals unnötig macht.

## Patentansprüche

1. Laserschweißgerät mit einer Düse (10) zur Erzeugung eines quer verlaufenden Gasstroms zwischen der Optik und dem Laserstrahlfokus zum Ablenken von in Richtung zur Optik bewegten Partikeln, bei dem der Düse (10) gegenüber eine Aufnahmeöffnung (12) einer Gasabzugsleitung (13) angeordnet ist, dadurch gekennzeichnet, daß die Düse (10) innerhalb eines Injektormantels (11) angeordnet ist wobei der Injektormantel (11) und die Gasabzugsleitung (13) einen im wesentlichen durchgehenden Strömungskanal bilden, der eine Queröffnung (7) für den Laserstrahl aufweist.

2. Laserschweißgerät nach Anspruch 1, dadurch gekennzeichnet, daß eine Druckausgleichseinrichtung zur Angleichung des Drucks im Strömungskanal (11, 12, 13) an der Laserstrahlaustrittsöffnung (7) an den Atmosphärendruck vorgesehen ist.

3. Laserschweißgerät nach Anspruch 2, dadurch gekennzeichnet, daß die Strahlrichtung der Düse (10) abweichend von der Richtung des Strömungskanals (11, 12, 13) eine zu der Laserstrahlaustrittsöffnung (7) gerichtete Komponente hat.

4. Laserschweißgerät nach einem der Ansprüche 1 bis 3, dadurch gekennzeichnet, daß der Strömungskanal (11, 12, 13) am objektseitigen Ende des Objektivtubus (3) angeordnet ist.

## Claims

1. A laser welding device with a nozzle (10) for creating a transversely extending gas flow between the optical system and the laser beam focus for the purpose of deflecting particles moving towards the optical system, in which a receiving aperture (12) of a gas outlet duct (13) is disposed opposite the nozzle (10), characterised in that the nozzle (10) is disposed inside an injector sheath (11), wherein the injector sheath (11) and the gas outlet duct (13) form an essentially continuous flow passage which has a transverse opening (7) for the laser beam.

2. A laser welding device according to Claim 1, characterised in that a pressure compensating means is provided for matching the pressure in the flow passage (11, 12, 13) at the laser beam outlet opening (7) to atmospheric pressure.

3. A laser welding device according to Claim 2, characterised in that the blast direction of the nozzle (10) has a component deviating from the direction of the flow passage (11, 12, 13), directed towards the laser beam outlet opening (7).

4. A laser welding device according to any one of Claims 1 to 3, characterised in that the flow passage (11, 12, 13) is disposed at the object end of the objective tube (3).

## Revendications

1. Dispositif de soudage par laser, comportant une buse (10) pour créer, entre l'optique et le foyer du rayon laser, un courant de gaz dirigé transversalement et destiné à dévier les particules mises en mouvement en direction de l'optique, la buse (10) étant disposée vis-à-vis d'un orifice de captage (12) d'une conduite d'évacuation de gaz (13), caractérisé en ce que la buse (10) est disposée à l'intérieur d'une chemise de pompe à jet (11), la chemise de pompe à jet (11) et la conduite d'évacuation de gaz (13) formant un canal d'écoulement pratiquement continu qui présente une ouverture transversale (7) pour le rayon laser.

2. Dispositif de soudage par laser selon la revendication 1, caractérisé en ce qu'un système de compensation de pression est prévu pour égaliser à la pression atmosphérique la pression dans le canal d'écoulement (11, 12, 13) au niveau de l'ouverture de sortie (7) du rayon laser.

3. Dispositif de soudage par laser selon la revendication 2, caractérisé en ce que la direction du jet de la buse (10), qui s'écarte de la direction du canal d'écoulement (11, 12, 13), a une composante dirigée vers l'ouverture de sortie (7) du rayon laser.

4. Dispositif de soudage par laser selon l'une quelconque des revendications 1 à 3, caractérisé en ce que le canal d'écoulement (11, 12, 13) est disposé à l'extrémité du côté objet du tube d'objectif (3).